# FASCICULE DE BREVET EUROPEEN

(11) **EP 3 354 129 B1**
(45) Date de publication et mention de la délivrance du brevet: **20.11.2019**
(21) Numéro de dépôt: 18151459.7
(22) Date de dépôt: 12.01.2018
(51) Int. Cl.: A01J 25/11, A01J 25/12

(54) **INSTALLATION POUR LE MOULAGE DE FROMAGES À PÂTE PRESSÉE**
ANLAGE FÜR DAS FORMEN VON HARTKÄSE
FACILITY FOR MOULDING PRESSED CHEESE

(30) Priorité: 26.01.2017 FR 1750637
(43) Date de publication de la demande: 01.08.2018
(73) Titulaire: Etablissements Chalon Megard, 01460 Montréal La Cluse (FR)
(72) Inventeur: LIUZZO, Dominique, 74800 Annecy (FR)
(74) Mandataire: Chevalier, Renaud Philippe

(56) Documents cités:
- EP-B1- 2 283 722
- FR-A1- 2 164 766
- FR-A1- 2 679 736
- US-A- 3 192 626

## Description

Le domaine technique de l'invention est celui des installations prévues pour le moulage de fromage à pâte pressée.

Le moulage des fromages à pâte pressée cuite, connus en particulier sous les noms de « Comté », « Emmental » ou « Beaufort », ou des fromages à pâte pressée demi-cuite ou non cuite, connus en particulier sous le nom de « Raclette », Morbier », Tomme » ou « Cantal », ou tous fromages analogues dans la classification technologique fromagère, dénommés sous diverses appellations, comporte une étape de transfert du mélange caillé et sérum dans des moules présentant des perforations pour évacuer le sérum.

Un type de dispositif de moulage sous vide pour la fabrication de tels fromages, présenté notamment par le document FR-A1-2679736, comporte un cylindre de moulage disposé suivant un axe vertical, prolongé vers le bas par une enveloppe présentant dans le plan horizontal un contour fermé polygonal.

L'enveloppe reçoit à l'intérieur un moule à fromage, présentant dans le plan horizontal un contour fermé circulaire ou polygonal suivant le type de fromage à produire. Le remplissage du moule à fromage par le mélange caillé et sérum, se fait par une aspiration sous vide dans le cylindre. Le caillé se dépose dans le moule disposé au fond, le sérum en trop étant aspiré dans le cylindre au-dessus de ce moule.

Il est connu de réaliser une installation de moulage de ce type de fromage, comportant une série de cylindres disposés en ligne, présentant à une extrémité l'entrée des moules vides, qui coulissent ensuite suivant cette ligne en effectuant les remplissages afin de ressortir pleins à l'autre extrémité. Plusieurs lignes peuvent être installées en parallèle, les entrées et les sorties étant disposées du même côté pour regrouper les déposes des moules vides et les sorties des moules pleins.

Ce type d'installation présente une emprise au sol relativement importante. De plus les opérateurs doivent se déplacer d'une extrémité à l'autre des lignes pour réaliser les différentes opérations d'entrée et de sortie, ce qui est peu ergonomique.

Sur un autre type d'installation de moulage connu comportant des cylindres disposés en ligne, on introduit à une extrémité de la ligne des moules vides, pour les faire coulisser dans cette ligne afin d'occuper toutes les places disponibles.

On effectue ensuite le remplissage des moules, puis ils ressortent en coulissant dans l'autre direction. On récupère alors les moules pleins du même côté que pour la dépose des moules vides.

Ce type d'installation pose un problème de temps de cycle qui est relativement long, puisqu'il faut attendre le remplissage complet de la ligne par une série de moules vides avant de procéder à leurs remplissages, puis la sortie complète de cette série de moules remplis avant de rentrer à nouveau une nouvelle série. On a des temps morts pour l'usage des moules qui ralentissent la cadence.

Un autre type d'installation connu, présenté notamment par le document EP-B1-2283722, comporte une structure rotative autour d'un axe vertical, présentant un ensemble de cylindres répartis régulièrement autour de cet axe.

On effectue alors de manière périodique une rotation de la structure suivant un angle défini correspondant au défilement d'un cylindre, pour former au même endroit un poste de retrait des moules pleins, puis à côté après la rotation de l'angle défini un poste de dépose des moules vides.

Les postes de dépose et de reprise des moules sont donc statiques, en évitant des déplacements des opérateurs ce qui est favorable pour l'ergonomie. Toutefois ce type d'installation présente un encombrement important, à cause notamment de la place perdue à l'intérieur du cercle formé par les cylindres.

Par ailleurs les ateliers traditionnels de fabrication des fromages ont tendance à augmenter le nombre de cylindres de leur installation pour accroître la productivité, ce qui impose d'optimiser l'encombrement au sol de ces installations ainsi que l'ergonomie.

La présente invention a notamment pour but d'éviter ces inconvénients de la technique antérieure.

Elle propose à cet effet selon la revendication 1 une installation prévue pour le moulage de fromages à pâte pressée, comportant des cylindres de réception d'un mélange caillé et sérum disposés suivant des lignes, prévus pour recevoir chacun à leur base un moule, cette installation étant remarquable en ce que les cylindres sont disposés suivant deux lignes parallèles présentant une direction longitudinale, et en ce qu'elle comporte un dispositif de convoyage automatique comprenant des moyens réalisant à partir d'une extrémité avant d'une première ligne, un convoyage des moules vers l'arrière le long de cette première ligne, un transfert latéral sur la deuxième ligne du moule à l'arrière de la première ligne, et un convoyage vers l'avant le long de cette deuxième ligne.

Un avantage de cette installation est que de manière automatique, les moules partent d'un poste de dépose des moules vides en avant de la première ligne, puis reviennent à un poste de reprise des moules pleins qui se trouve juste à côté de ce poste de dépose, en avant de la deuxième ligne parallèle.

Un opérateur ou un système de convoyage extérieur peut alors réaliser facilement les opérations de dépose et de reprise des moules sensiblement au même endroit, avec très peu de déplacements. De plus l'installation est très compacte, les deux lignes de moules pouvant être collées l'une à l'autre ce qui évite des pertes d'espace à l'intérieur.

L'installation pour le moulage de fromage selon l'invention peut comporter de plus une ou plusieurs des caractéristiques suivantes, qui peuvent être combinées entre elles.

Avantageusement, les deux lignes de cylindres sont accolées. On évite une perte de place entre elles.

Avantageusement, chaque ligne de cylindres comporte un système de transfert longitudinal de ses moules, réalisant un déplacement des moules suivant un pas égal à la distance longitudinale entre l'axe de deux cylindres proches.

Dans ce cas, le système de transfert longitudinal de chaque ligne de cylindres, peut comporter deux barres longitudinales disposées de chaque côté des moules, présentant chacune une série de cales espacées d'un pas.

De plus, l'installation peut comporter des vérins de rotation entraînant en rotation les barres. Ce système de barres rotatives et en translation simple à réaliser, garantit de manière sûre l'avance de chaque moule.

Dans ce cas, avantageusement chaque ligne comporte un vérin de translation qui déplace en translation les deux barres de la ligne.

Avantageusement, l'installation comporte un moyen de transfert latéral, comprenant un poussoir qui pousse latéralement un moule de la première ligne à la deuxième ligne.

Avantageusement, l'installation comporte un support de dépose des moules vides, disposé en avant d'un châssis principal supportant l'ensemble des cylindres.

Avantageusement, l'installation comporte un bac de récupération disposé en dessous de l'ensemble des cylindres.

Dans ce cas, avantageusement les bords latéraux du bac de récupération comportent des trappes d'ouverture. Ces trappes d'ouverture permettent un accès aux équipements intérieurs de l'installation, en particulier pour faciliter le nettoyage.

D'autres caractéristiques et avantages de l'invention ressortiront à la lecture de la description qui suit, donnée uniquement à titre d'exemple, en référence aux figures annexées suivantes :
- la figure 1 présente en perspective vue du côté avant, une installation de moulage selon l'invention comportant six cylindres disposés sur chaque ligne ;
- la figure 2 est une vue de dessus de cette installation ;
- la figure 3 est une vue de détail du poste de dépose et de reprise des moules ;
- la figure 4 est une vue suivant un plan de coupe transversale IV-IV de cette installation ; et
- la figure 5 est une vue de dessus de cette installation équipée d'un convoyeur extérieur.

Pour plus de clarté, les éléments identiques ou similaires sont repérés par des signes de référence identiques sur l'ensemble des figures.

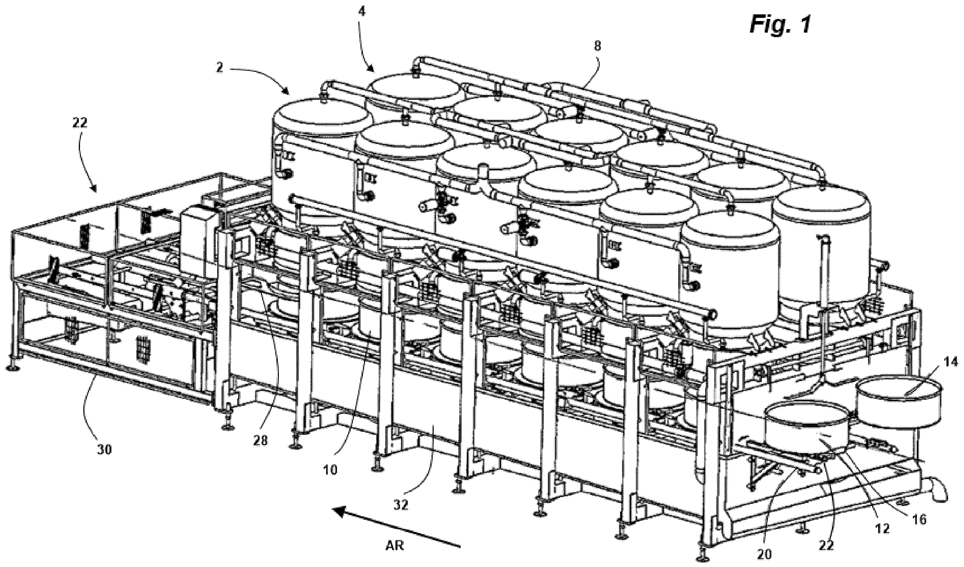

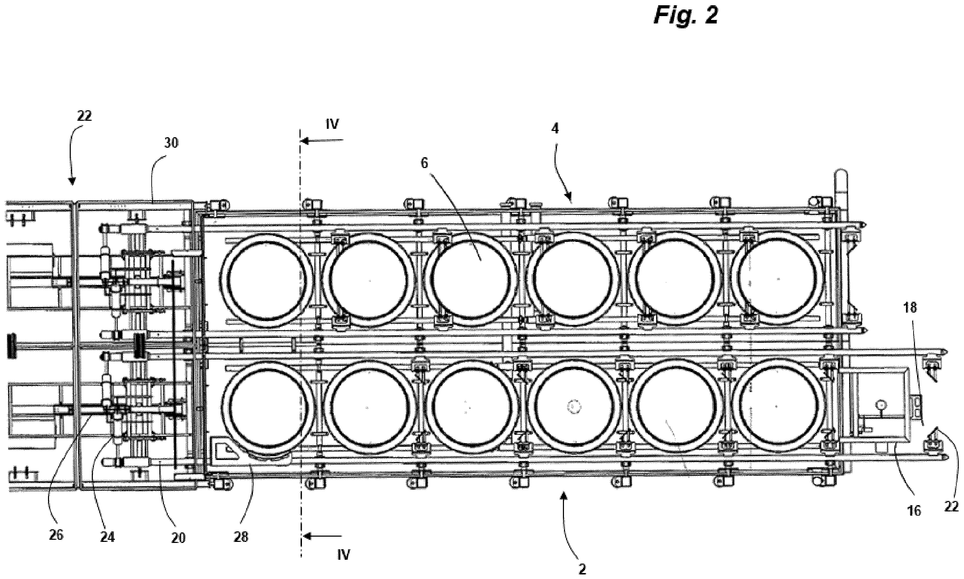

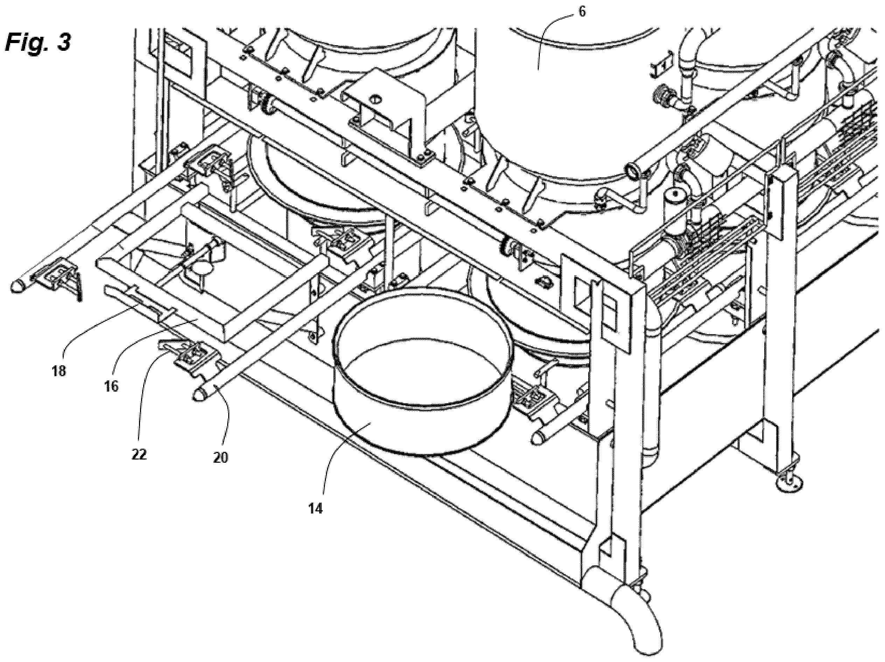

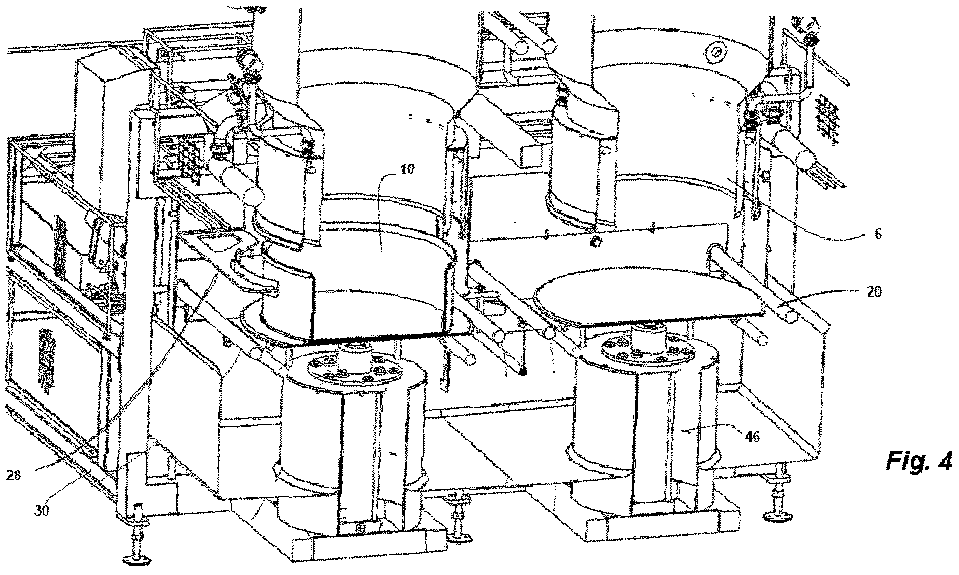

Les figures 1, 2, 3 et 4 présentent une installation pour le moulage de fromages à pâte pressée, comportant en regardant du côté arrière indiqué par la flèche « AR », vers la gauche une première ligne 2 de six cylindres 6 recevant à l'avant un moule vide 12, et vers la droite une deuxième ligne parallèle 4 comportant le même nom de cylindres, délivrant à l'avant un moule plein 14.

L'ensemble des cylindres 6 maintenus dans un châssis principal formé de tubes de section carrée, est alimenté par une aspiration sous vide du mélange de caillé et de sérum venant d'un réseau de canalisations 8, qui est préparé dans des cuves disposées à côté.

Un vérin de démoulage 46 est disposé en-dessous de chaque cylindre 6. Un bac de récupération du sérum 32 disposé à l'intérieur du châssis principal, en-dessous de l'ensemble des cylindres 6, reçoit le sérum s'écoulant à l'extérieur de ces cylindres.

Le bac de récupération 32 comporte sur ses parois latérales des trappes disposées en face de chacun des cylindres 6 afin de faciliter un accès à chaque cylindre, et de permettre si nécessaire une sortie manuelle du moule 10 se trouvant en dessous. Il comporte aussi sur la paroi avant des trappes. L'ensemble des trappes permet la projection d'un fluide de nettoyage à l'intérieur de l'installation, pour accéder facilement aux composants internes.

L'installation comporte un circuit de nettoyage automatique, comprenant des buses de pulvérisation du liquide de nettoyage qui peuvent présenter une tête fixe ou rotative.

Le poste de dépose des moules vides 12 comporte un support 16 fixé sur le bac de récupération 32, disposé dans le plan horizontal de circulation des moules, dépassant vers l'avant du châssis principal, comprenant à l'avant une butée 18 qui assure le bon positionnement du moule vide.

Un transfert longitudinal pas à pas déplace vers l'arrière les moules 10 déposés à l'avant de la première ligne 2, d'un pas à la fois correspondant à la distance entre l'axe de deux cylindres 6 proches. Un transfert longitudinal similaire déplace vers l'avant d'un pas à la fois, les moules se trouvant sur la deuxième ligne 4.

Un poussoir latéral 28 disposé sur le côté extérieur de la première ligne 2, en face du cylindre arrière, décale latéralement le moule 10 en dessous de ce cylindre pour l'ajuster sur la deuxième ligne 4.

L'ordre des transferts est le suivant. On a d'abord un déplacement vers l'avant d'un pas des moules 10 sur la deuxième ligne 4, ce qui sort le moule plein 14 en avant de cette ligne, et libère la place en arrière de cette ligne. On a ensuite le transfert latéral du moule à l'arrière de la première ligne 2 vers la deuxième ligne 4, ce qui libère la place en arrière de cette première ligne. On a enfin le déplacement vers l'arrière des moules sur la première ligne 2, ce qui intègre sur cette ligne le moule vide 12 déposé sur le support 16.

L'ensemble des mouvements du dispositif de convoyage est contrôlé par un automate programmable ou un ordinateur.

Chaque transfert longitudinal d'une ligne de cylindres 2, 4 comporte de chaque côté des moules 10 de cette ligne, une barre longitudinale 20 de section circulaire. Les deux barres 20 encadrent la série de moules 10 alignés. Chaque barre 20 comporte une série de cales 22 espacées suivant un pas, ces cales présentant dans une position haute une face inclinée disposée dans un plan horizontal, tournée vers l'arrière pour la première ligne 2 et vers l'avant pour la deuxième ligne 4.

La motorisation du dispositif de convoyage est assurée par des vérins installés dans un châssis complémentaire 30 rapporté à l'arrière du châssis principal, ce qui a pour avantage de rendre très accessible les composants se trouvant à l'intérieur. En particulier on peut détacher l'ensemble du châssis complémentaire 30 pour intervenir dessus.

Chaque barre 20 reçoit un vérin 24 de rotation de cette barre suivant son axe, qui est disposé dans un plan transversal. Le vérin de rotation 24 tourne la barre suivant deux positions angulaires, donnant pour l'une une position haute des cales 22 où elles peuvent entraîner les moules 10, et pour l'autre une position basse de ces cales où elles passent en dessous des moules.

Pour chaque ligne 2, 4, l'ensemble des deux barres 20 et des deux vérins de rotation 24 associés, est entraîné longitudinalement suivant un pas par un vérin de translation 26. De cette manière pour le déplacement des moules 10 vers l'arrière sur la première ligne 2, le vérin de translation 26 va en arrière quand les cales 22 sont en position haute et en avant quand elles sont en position basse. A l'inverse pour le déplacement des moules 10 vers l'avant sur la deuxième ligne 4, le vérin de translation 26 va en avant quand les cales 22 sont en position haute et en arrière quand elles sont en position basse.

En synchronisant le transfert latéral d'un moule réalisé par le poussoir 28, avec les déplacements longitudinaux des deux lignes 2, 4, on obtient un déplacement automatisé, rapide et sécurisé de tous les moules. On notera que l'on obtient une circulation du type premier entré - premier sorti, appelée « FI-FO » (abréviation des termes anglais first in - first out), qui est rationnelle.

L'opérateur reste dans la zone restreinte en avant des lignes 2, 4, et se déplace très peu pour réaliser la dépose des moules vides 12 ou la reprise des moules pleins 14.

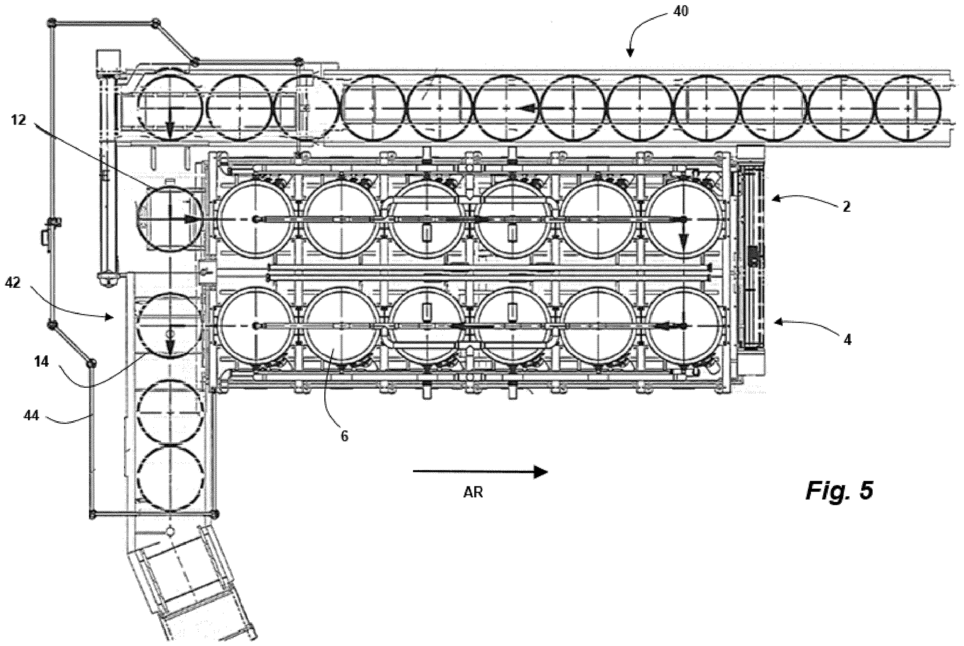

La figure 5 présente l'installation de moulage comportant un convoyeur extérieur mécanisé comprenant une branche longitudinale 40 accolée sur son côté gauche, et une branche transversale 42 accolée sur son avant, protégée par une barrière de sécurité 44.

Les moules vides 12 viennent de l'arrière sur la branche longitudinale 40, puis translatent vers le côté sur la branche transversale 42, pour venir en face de la première ligne 2 sur le poste d'entrée.

Après avoir parcouru l'ensemble de l'installation de remplissage, les moules pleins 14 sur le poste de sortie en face de la deuxième ligne 4, sont évacués sur la branche transversale 42 vers la droite.

## Revendications

1. Installation prévue pour le moulage de fromages à pâte pressée, comportant des cylindres (6) de réception d'un mélange caillé et sérum disposés suivant des lignes (2, 4), prévus pour recevoir chacun à leur base un moule (10), **caractérisée en ce que** les cylindres (6) sont disposés suivant deux lignes parallèles (2, 4) présentant une direction longitudinale, et **en ce qu'**elle comporte un dispositif de convoyage automatique comprenant des moyens permettant de réaliser à partir d'une extrémité avant d'une première ligne (2), un convoyage des moules (10) vers l'arrière le long de cette première ligne (2), un transfert latéral sur la deuxième ligne (4) du moule à l'arrière de la première ligne (2), et un convoyage vers l'avant le long de cette deuxième ligne (4).

2. Installation selon la revendication 1, **caractérisée en ce que** les deux lignes de cylindres (2, 4) sont accolées.

3. Installation selon la revendication 1 ou 2, **caractérisée en ce que** chaque ligne de cylindres (2, 4) comporte un système de transfert longitudinal de ses moules (10), permettant de réaliser un déplacement des moules suivant un pas égal à la distance longitudinale entre l'axe de deux cylindres (6) proches.

4. Installation selon la revendication 3, **caractérisée en ce que** le système de transfert longitudinal de chaque ligne de cylindres (2, 4), comporte deux barres longitudinales (20) disposées de chaque côté des moules (10), présentant chacune une série de cales (22) espacées d'un pas.

5. Installation selon la revendication 4, **caractérisée en ce qu'**elle comporte des vérins de rotation (24) entraînant en rotation les barres (20).

6. Installation selon la revendication 4 ou 5, **caractérisée en ce que** chaque ligne (2, 4) comporte un vérin de translation (26) qui peut déplacer en translation les deux barres (20) de la ligne.

7. Installation selon l'une quelconque des revendications précédentes, **caractérisée en ce qu'**elle comporte un moyen de transfert latéral (28), comprenant un poussoir (28) qui peut pousser latéralement un moule (10) de la première ligne (2) à la deuxième ligne (4).

8. Installation selon l'une quelconque des revendications précédentes, **caractérisée en ce qu'**elle comporte un support (16) de dépose des moules vides (12), disposé en avant d'un châssis principal supportant l'ensemble des cylindres (6).

9. Installation selon l'une quelconque des revendications précédentes, **caractérisée en ce qu'**elle comporte un bac de récupération (32) disposé en dessous de l'ensemble des cylindres (6).

10. Installation selon la revendication 9, **caractérisée en ce que** les bords latéraux du bac de récupération (32) comportent des trappes d'ouverture.

## Patentansprüche

1. Anlage, die für das Formen von Hartkäsen vorgesehen ist, umfassend in Reihen (2, 4) angeordnete Zylinder (6) zum Aufnehmen eines Bruch- und Molke-Gemischs, die dafür vorgesehen sind, jeder an seiner Basis eine Form (10) aufzunehmen, **dadurch gekennzeichnet, dass** die Zylinder (6) in zwei parallelen Reihen (2, 4) angeordnet sind, die eine Längsrichtung aufweisen, und dadurch, dass sie eine automatische Fördervorrichtung umfasst, die Mittel umfasst, welche es ermöglichen, ein Fördern der Formen (10) ab einem vorderen Ende einer ersten Reihe (2) entlang dieser ersten Reihe (2) zur Hinterseite, an der Hinterseite der ersten Reihe (2) ein seitliches Transferieren der Form in die zweite Reihe (4), und ein Fördern entlang dieser zweiten Reihe (4) zur Vorderseite auszuführen.

2. Anlage nach Anspruch 1, **dadurch gekennzeichnet, dass** die zwei Zylinderreihen (2, 4) zusammenhängen.

3. Anlage nach Anspruch 1 oder 2, **dadurch gekennzeichnet, dass** jede Zylinderreihe (2, 4) ein Längstransfersystem ihrer Formen (10) umfasst, das es ermöglicht, ein Bewegen der Formen gemäß einer Teilung auszuführen, die gleich dem Längsabstand zwischen der Achse von zwei benachbarten Zylindern (6) ist.

4. Anlage nach Anspruch 3, **dadurch gekennzeichnet, dass** das Längstransfersystem jeder Zylinderreihe (2, 4) zwei beidseits der Formen (10) angeordnete Längsstangen (20) umfasst, die jede eine Reihe von um eine Teilung beabstandeten Keilen (22) aufweisen.

5. Anlage nach Anspruch 4, **dadurch gekennzeichnet, dass** sie Drehzylinder (24) umfasst, die die Stangen (20) drehbar antreiben.

6. Anlage nach Anspruch 4 oder 5, **dadurch gekennzeichnet, dass** jede Reihe (2, 4) einen Verschiebezylinder (26) umfasst, der die zwei Stangen (20) der Reihe verschiebbar bewegen kann.

7. Anlage nach einem der vorstehenden Ansprüche, **dadurch gekennzeichnet, dass** sie ein Seitentransfermittel (28) umfasst, das einen Schieber (28) umfasst, der eine Form (10) von der ersten Reihe (2) seitwärts zur zweiten Reihe (4) schieben kann.

8. Anlage nach einem der vorstehenden Ansprüche, **dadurch gekennzeichnet, dass** sie einen Träger (16) zum Abstellen der leeren Formen (12) umfasst, der vor einem Hauptrahmen angeordnet ist, welcher die Gesamtheit der Zylinder (6) trägt.

9. Anlage nach einem der vorstehenden Ansprüche, **dadurch gekennzeichnet, dass** sie eine Auffangwanne (32) umfasst, die unter der Gesamtheit der Zylinder (6) angeordnet ist.

10. Anlage nach Anspruch 9, **dadurch gekennzeichnet, dass** die Seitenränder der Auffangwanne (32) Öffnungsklappen umfassen.

## Claims

1. An installation provided for the molding of pressed cheeses, including cylinders (6) for receiving a mixture of curd and serum disposed along rows (2, 4), each intended to receive a mold (10) at their base, **characterized in that** the cylinders (6) are disposed along two parallel rows (2, 4) having a longitudinal direction, and **in that** it includes an automatic conveying device comprising means allowing carrying out from a front end of a first row (2), a conveying of the molds (10) rearwardly along this first row (2), a lateral transfer on the second row (4) of the mold at the rear of the first row (2), and a conveying forwardly along this second row (4).

2. The installation according to claim 1, **characterized in that** the two rows of cylinders (2, 4) are contiguous.

3. The installation according to claim 1 or 2, **characterized in that** each row of cylinders (2, 4) includes a system for longitudinal transfer of its molds (10), allowing carrying out a displacement of the molds according to a step equal to the longitudinal distance between the axis of two close cylinders (6).

4. The installation according to claim 3, **characterized in that** the longitudinal transfer system of each row of cylinders (2, 4) includes two longitudinal bars (20) disposed on each side of the molds (10), each having a series of wedges (22) spaced one step apart.

5. The installation according to claim 4, **characterized in that** it includes rotation actuators (24) driving in rotation the bars (20).

6. The installation according to claim 4 or 5, **characterized in that** each row (2, 4) includes a translation actuator (26) which can displace in translation the two bars (20) of the row.

7. The installation according to any one of the preceding claims, **characterized in that** it includes a lateral transfer means (28), comprising a pusher (28) which can push laterally a mold (10) from the first row (2) to the second row (4).

8. The installation according to any one of the preceding claims, **characterized in that** it includes a support (16) for depositing empty molds (12), disposed in front of a main frame supporting the set of the cylinders (6).

9. The installation according to any one of the preceding claims, **characterized in that** it includes a collecting tray (32) disposed below the set of the cylinders (6).

10. The installation according to claim 9, **characterized in that** the lateral edges of the collecting tray (32) include opening hatches.
